# EUROPÄISCHE PATENTSCHRIFT

(11) **EP 1 469 467 B1**
(45) Veröffentlichungstag und Bekanntmachung des Hinweises auf die Patenterteilung: **03.03.2010**
(21) Anmeldenummer: 04009003.7
(22) Anmeldetag: 15.04.2004
(51) Int. Cl.: B29C 31/00, G11B 7/26

(54) **Vorrichtung und Verfahren zum Herstellen von Verbundsubstraten**
Method and apparatus for making composite substrates
Procédé et dispositif de fabrication de substrats composites

(30) Priorität: 17.04.2003 DE 10317886
(43) Veröffentlichungstag der Anmeldung: 20.10.2004
(73) Patentinhaber: Singulus Technologies AG, 63796 Kahl/Main (DE)
(72) Erfinder: Kempf, Stefan, 63796 Kahl/Main (DE); Schmitt, Karl, 63796 Kahl/Main (DE)
(74) Vertreter: Vossius & Partner

(56) Entgegenhaltungen:
- EP-A- 1 256 948
- US-B1- 6 231 706

## Beschreibung

Die vorliegende Erfindung betrifft eine Vorrichtung und ein Verfahren zum Herstellen von Verbundsubstraten, insbesondere von scheibenförmigen bzw. flächigen Verbundsubstraten, wie z.B. Compact Discs (CDs) oder Digital Versatile Discs (DVDs).

Derartige Vorrichtungen werden insbesondere bei der Herstellung von DVDs und CDs, beispielsweise deren Beschichtung, verwendet, wobei während dem Transport verschiedene Bearbeitungsstationen von den Substraten durchlaufen werden. An den Bearbeitungsstation kann ein Substrat abgelegt und wieder aufgenommen werden.

Bei der Herstellung von DVDs und CDs ist es auf Grund der steigenden Anzahl an Produkten und Produktionsvarianten von besonderer Bedeutung, einen flexiblen, in Bezug auf Durchlaufzeit, Raumbedarf, Sicherheit und Prozessstabilität optimierten Materialfluss zu realisieren. Beim Transport unterschiedlicher Substrate zur Herstellung der Verbundsubstrate ist weiterhin ein Vertauschen der Substrate zu verhindern.

Üblicherweise besteht eine DVD bzw. CD aus zwei Substraten bzw. Substrathälften gebildet, die miteinander verklebt bzw. gebonded werden. Hierbei werden die Substrate bzw. Substrathälften beispielsweise von einer Spritzgußmaschine hergestellt, wobei jeweils zwei Substrate unterschiedliche Bearbeitungsschritte durchlaufen, um anschließend miteinander verbunden zu werden; das so gefertigte Verbundsubstrat durchläuft danach weitere zur Herstellung erforderliche Prozess- bzw. Bearbeitungsschritte. Herkömmliche Systeme weisen eine Transport- bzw. Handhabungseinrichtung auf, die die Substrate von einer Zuführeinrichtung zu einer Abgabeeinrichtung bewegen, wobei die Transporteinrichtung alle Substrate entsprechend einer vorgegebenen Taktzeit parallel von einer Station zur nächsten transportiert. Daher entspricht die Zykluszeit bekannter Systeme in etwa dem längsten Bearbeitungsschritt, den ein Substrat bzw. ein gebondetes Substrat (Verbundsubstrat) durchläuft.

US 6,231,706 betrifft eine Vorrichtung zur Erstellung optischer Scheiben mit einem Substratspeicherabschnitt 10, auf dem vorbereitete Substrate Da und Db auf Drehtischen gelagert werden, sowie einem Zuführübergabeabschnitt mit einem Turnover-Mechanismus. Die zwei Substrate Da, Db werden mittels einer Transporteinrichtung dem Übergabeabschnitt entnommen und im Wechsel einer von zwei Fügestationen zugeführt. Von diesen werden die gebondeten Substrate zwei parallelen Hochgeschwindigkeitsrotationsstufen zugeführt, um anschließend zur weiteren Bearbeitung auf einem Förderband abgelegt zu werden.

Es ist daher Aufgabe der vorliegenden Erfindung, eine Vorrichtung bereitzustellen, die einen optimierten Transport der einzelnen Substrate bzw. der gebondeten Substrate insbesondere in Bezug auf Durchlaufzeit, Raumbedarf, Sicherheit und Prozessstabilität gewährleistet. Hierbei kommt einer Verringerung der Zykluszeit besondere Bedeutung zu, da die Zykluszeiten zur Herstellung der Substrate bzw. Substratrohlinge sinken. Beispielsweise erreichen Spritzgußmaschinen heute eine Zykluszeit von etwa 3,0s, wobei in Zukunft mit Zykluszeiten um 2,5s und weniger zu rechnen ist. Gemäß einer weiteren bzw. zusätzlichen Aufgabe der vorliegenden Erfindung soll die Zykluszeit für die Bearbeitung der Substrate bzw. der gebondeten Substrate 10% geringer sein als die zur Herstellung der Substrate benötigte Zykluszeit, und/oder es soll die Zykluszeit für die Bearbeitung der Substrathälften in etwa gleich lang sein.

Der Erfindung liegt die Aufgabe zu Grunde, eine Vorrichtung und ein Verfahren zum Transport von einem oder mehreren Substraten zur Verfügung zu stellen, wobei ein optimierter Materialfluss, eine optimierte Handhabung und Bearbeitung insbesondere hinsichtlich der Zykluszeit ermöglicht werden. Weitere bzw. zusätzliche Aufgabe der Erfindung ist es, den Transport bzw. die Handhabung des bzw. der Substrate derart zu optimieren, dass der sog. Bottleneck-Problematik durch einzelne, zeitaufwendige Prozessstationen begegnet wird. Weiterhin ist es Aufgabe der vorliegenden Erfindung, einen einfach zu steuernden Materialfluss zu gewährleisten. Diese Aufgabe(n) wird/werden mit den Merkmalen der Patentansprüche gelöst.

Die Erfindung geht dabei von dem Grundgedanken aus, eine Vorrichtung und ein Verfahren zum Transportieren von mindestens einem Substrat von einer Zuführ- zu einer Abgabeeinrichtung entlang mehrerer Prozessstationen bereitzustellen, wobei die Vorrichtung eine erste Transporteinrichtung und eine zweite Transporteinrichtung aufweist, und wobei die zweite Transporteinrichtung innerhalb eines Bearbeitungszyklus nur halb so viele Transportbewegungen ausführt wie die erste Transporteinrichtung, bzw. wobei die erste Transporteinrichtung im Materialfluss der ungebondeten Substrate angeordnet ist, während die zweite Transporteinrichtung die gebondeten Substrate (Verbundsubstrate) handhabt, bzw. transportiert. Weiterhin ist die erste Transporteinrichtung im Materialfluss- bzw. Transportablauf vor der zweiten Transporteinrichtung angeordnet. Vorzugsweise ist die erste Transporteinrichtung im Materialfluss zwischen der Zuführeinrichtung und der zweiten Transporteinrichtung angeordnet, während die zweite Transporteinrichtung im Materialfluss zwischen der ersten Transporteinrichtung und der Abgabeeinrichtung angeordnet ist.

Gemäß einer bevorzugten Ausführungsform weist die Vorrichtung zwei autark arbeitende Transporteinrichtungen bzw. Handhabungssysteme auf, wobei die erste Transporteinrichtung das Transportieren bzw. Handhaben und Fügen der Substrathälften oder ungefügten Substrate durchführt, während das zweite Handhabungssystem bzw. die zweite Transporteinrichtung das Handhaben bzw. Transportieren der gefügten Substrate von und zu den Prozessstationen durchführt.

Die Vorrichtung und das Verfahren sind vorzugsweise derart ausgebildet, dass sich die zweite Transporteinrichtung nur halb so oft wie die erste Transporteinrichtung bewegt bzw. dass ein Transport der gefügten bzw. gebondeten Substrate nur halb so oft erfolgt, wie der Transport der Substrathälften bzw. ungefügten Substrate. Hierdurch stehen den von der zweiten Transporteinrichtung bedienten Prozessstationen wesentlich längere Prozesszeiten zur Verfügung bzw. die von der zweiten Transporteinrichtung bedienten Prozessstationen bilden nicht mehr den sog. Flaschenhals bzw. Bottleneck und erlauben somit eine weitere Verkürzung der Zykluszeit.

Gemäß einer bevorzugten Ausführungsform ist die erste Transporteinrichtung um eine Drehachse um einen Winkel β drehbar und weist zwei, auf einem Kreisbogen in einem Winkelabstand α um die Drehachse angeordnete Greifer auf. Hierbei ist die zweite Transporteinrichtung vorzugsweise um einen Winkel γ um eine Drehachse drehbar ausgebildet und weist entsprechend der nach den Fügen erforderliche Zahl von Bearbeitungsstationen, z.B. vier auf einem Kreisbogen in einem Winkelabstand δ um die Drehachse angeordnete Greifer auf. Gemäß einer bevorzugten Ausführungsform entspricht der Winkel β dem Winkelabstand α und der Winkel γ dem Winkelabstand δ.

Entsprechend einer bevorzugten Ausführungsform transportiert die erste Transporteinrichtung die Substrate von einer Zuführeinrichtung zu einer Sputterstation und von der Sputterstation zu einer Füge- bzw. Bondingstation sowie von der Zuführstation ohne Bearbeitung über die Sputterstation zur Füge- bzw. Bondingstation. Hierbei ist die Sputterstation vorzugsweise derart ausgebildet, dass sie zwei Substrate aufnehmen kann, wobei jeweils nur ein Substrat bearbeitet wird. Die zweite Transporteinrichtung handhabt bzw. transportiert die an der Bondingstation gefügten Substrate oder Verbundsubstrate vorzugsweise über mindestens eine weitere Prozessstation zu einer Abgabeeinrichtung.

Gemäß einer bevorzugten Ausführungsform durchlaufen die Verbundsubstrate einen Abschleuderprozess, bei dem überschüssiges Fügematerial abgeschleudert wird, einen Trocknungsprozess zum Aushärten des Fügematerials bzw. zur Festigung der Verbundsubstrate sowie einen Scan- bzw. Inspektionsprozess. Diesem folgt vorzugsweise ein Sortier- bzw. Aussortierprozess, in dem nicht geeignete oder fehlerhafte Verbundsubstrate (DVDs oder CDs) aussortiert werden. Von den ungefügten Substraten durchläuft vorzugsweise jedes zweite Substrat (nachstehend auch als Substrat erster Art bezeichnet) einen Sputter- bzw. Metallisierungs- oder Beschichtungsprozess, während das andere Substrat (nachstehend auch als Substrat zweiter Art bezeichnet) vorzugsweise keinen weiteren oder einen unterschiedlichen Bearbeitungsprozess durchläuft. In der Bondingstation wird Bond- bzw. Fügematerial auf ein Substrat aufgetragen und dieses mit einem weiteren Substrat gefügt. Vorzugsweise wird das Bondmaterial auf ein metallisiertes Substrat aufgetragen und dieses mit einem nichtmetallisierten gefügt bzw. gebondet.

Das erfindungsgemäße Verfahren entspricht vorzugsweise der Verwendung einer erfindungsgemäßen Vorrichtung. Gemäß einem bevorzugten Verfahren erfolgt der Transport bzw. die Handhabung der Substrate gemäß den folgenden Schritten: Hierbei erfolgt der Transport des gebondeten Substrats oder Verbundsubstrats von der Fügestation zur Abschleuderstation durch die zweite Transporteinrichtung, wobei diese zeitgleich ein Verbundsubstrat von der Schleuderstation zur Härtestation, ein Verbundsubstrat von der Härtestation zur Scan- bzw. Inspektionsstation und ein Verbundsubstrat von der Inspektionsstation zu einer Folgestation transportiert. Zeitgleich transportiert die erste Transporteinrichtung ein unbearbeitetes Substrat zweiter Art von der Zuführeinrichtung zur Sputter- bzw. Metallisierungsstation und ein metallisiertes Substrat erster Art von der Sputter- bzw Metallisierungsstation zur Fügestation. In einem weiteren Schritt starten die verschiedenen Prozesse, wie Auftragen des Füge- bzw. Bondmaterials auf das Substrat, sowie Abschleudern, Trocknen bzw. Härten, Scannen und Aussortieren bzw. Weitertransport der vorher gefertigten Verbundsubstrate.

Ist das Bondmaterial bzw. Fügematerial aufgetragen, schwenkt die erste Transporteinrichtung ohne Substrate zurück und nimmt ein weiteres unbearbeitetes Substrat erster Art von der Zuführeinrichtung sowie das zuvor an der Sputter- bzw. Metallisierungsstation abgelegte, jedoch nicht metallisierte Substrat zweiter Art auf und transportiert diese zu den Prozessstationen. D.h. das von der Zuführeinrichtung aufgenommene noch nicht bearbeitete Substrat erster Art zur Sputter- bzw. Metallisierungsstation und das von der Sputter- bzw. Metallisierungsstation aufgenommene unbearbeitete Substrat zweiter Art zur Bondingsstation. Während dieser Zeit dauernd die Prozesse an den von der zweiten Transporteinrichtung bestimmten Stationen an.

In einem weiteren Arbeitsschritt werden das metallisierte Substrat (erster Art) und das nicht metallisierte Substrat (zweiter Art) an der Fügestation gefügt. Weiterhin tauscht die Metallisierungs- bzw. Sputterstation nach vollendetem Metallisierungsvorgang das zuvor abgelegte, noch unbearbeitete Substrat (erster Art) mit dem soeben bearbeitetem Substrat (erster Art) aus. In einem letzten Arbeitsschritt sind die Prozesse an den von der zweiten Transporteinrichtung bestückten Prozessstationen beendet und die zweite Transporteinrichtung schwenkt zurück, um wieder den ersten Arbeitsschritt auszuführen. Ebenso schwenkt die erste Transporteinrichtung zurück, um den ersten Bearbeitungsschritt auszuführen. Die Bearbeitungsschritte wiederholen sich solange die Vorrichtung in Betrieb ist.

Aus der beschriebenen Bearbeitungsfolge ergibt sich, dass die Bearbeitungsprozesse der gebondeten Substrate wie Abschleudern, Trocknen bzw. Aushärten und Scannen sowie Aussortieren über mehrere Schritte andauern können und sie somit ein sehr großes zeitliches Prozessfenster haben. Die Metallisierung bzw. das Sputtern kann läuft ebenfalls während mehrerer Prozessschritt ab, allerdings zeitlich versetzt. Weiterhin erfolgt das Fügen der Substrate während eines Prozeßschritts; das Fügematerial bzw. Bondmaterial wird während eines weiteren Prozessschrittes aufgetragen.

Die erfindungsgemäße Vorrichtung bzw. das erfindungsgemäße Verfahren ermöglichen somit eine Verkürzung der gesamten Zykluszeit, vorzugsweise bei gleichzeitiger Vergrößerung der Prozessfenster einzelner Bearbeitungsschritte.

Nachfolgend werden eine erfindungsgemäße Vorrichtung und ein erfindungsgemäßes Verfahren anhand einer bevorzugten Ausführungsform unter Bezugnahme auf die Zeichnungen näher beschrieben. Es zeigen:
- Fig. 1: eine Prinzipskizze einer erfindungsgemäßen Vorrichtung;
- Fig. 2: eine erfindungsgemäße Vorrichtung in der Draufsicht zu einem Zeitpunkt t₀;
- Fig. 3: eine erfindungsgemäße Vorrichtung gemäß Fig. 1 zu einem Zeitpunkt t₁;
- Fig. 4: eine erfindungsgemäße Vorrichtung gemäß Fig. 1 zu einem Zeitpunkt t₂;
- Fig. 5: eine erfindungsgemäße Vorrichtung gemäß Fig. 1 zu einem Zeitpunkt t₃;
- Fig. 6: eine erfindungsgemäße Vorrichtung zu einem Zeitpunkt t₄ = t₀; und

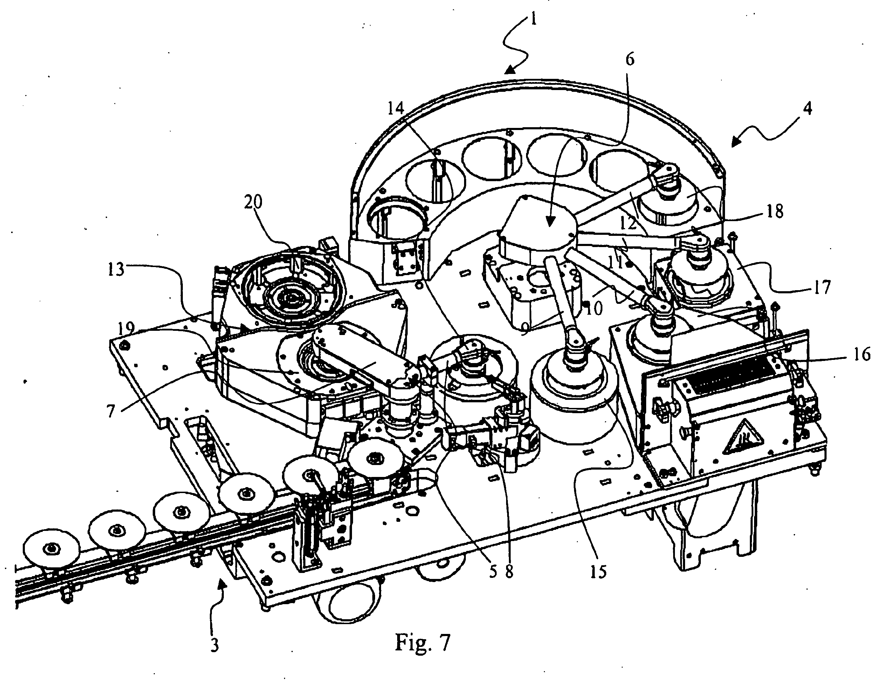

- Fig. 7: eine räumliche Darstellung einer erfindungsgemäßen Vorrichtung mit der in Fig. 5 dargestellten Position der Transporteinrichtungen.

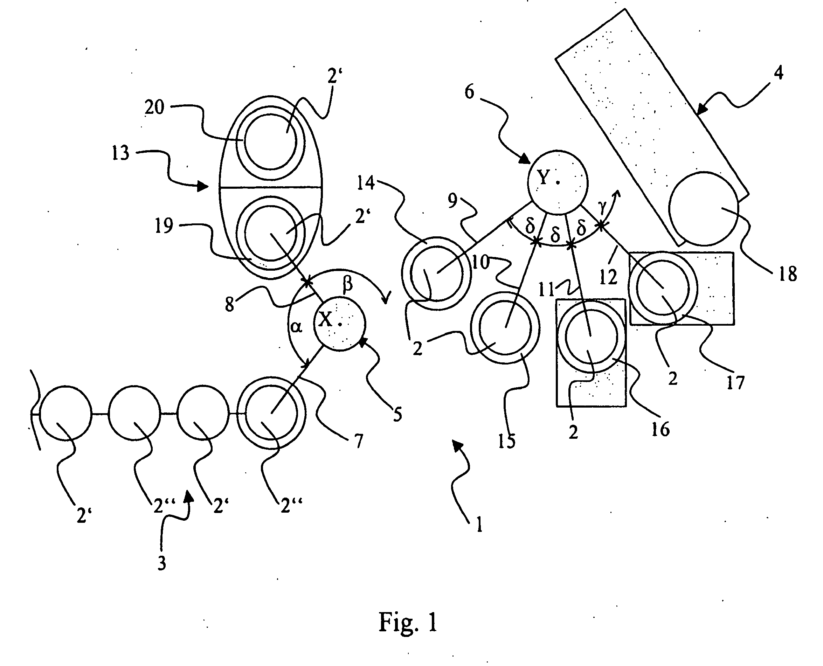

Fig. 1 zeigt eine Vorrichtung 1 mit einer ersten Transporteinrichtung 5 zum Transportieren von abwechselnd Substraten der ersten Art 2' und Substraten der zweiten Art 2" von einer Zuführeinrichtung 3 zu einer Füge- oder Bondstation 14 und mit einer zweiten Transporteinrichtung 6 zum Transportieren der gebondeten Verbundsubstrate 2 von der Füge- oder Bondstation 14 zu einer Abgabeeinrichtung 4. Die erste Transporteinrichtung 5 weist vorzugsweise eine Drehachse X auf, um die sie um einen Winkel β drehbar ist. Ferner weist die erste Transporteinrichtung 5 vorzugsweise zwei, auf einem Kreisbogen in einem Winkelabstand α um die Drehachse X angeordnete Greifer 7, 8 auf. Die zweite Transporteinrichtung 6 ist vorzugsweise um eine Drehachse Y um einen Winkel γ drehbar und weist z.B. vier auf einem Kreisbogen in einem Winkelabstand δ um die Drehachse Y angeordnete Greifer 9, 10, 11 und 12, auf.

Die Transporteinrichtungen 5, 6 sind derart ausgebildet bzw. angeordnet, dass die Substrate 2', 2" bzw. 2 entlang mehreren Prozessstationen 13, 14, bzw. 14, 15, 16, 17 und 18 von der Zuführeinrichtung 3 zur Abgabeeinrichtung 4 transportiert werden können. Bei den Prozessstationen handelt es sich vorzugsweise um eine Sputter- bzw. Metallisierungsstation 13, eine Füge- bzw. Bondstation 14, eine Abschleuderstation 15, eine Aushärte- bzw. Trocknungsstation 16, eine Inspektions- bzw. Scanstation 17 sowie eine Aussortierstation 18, die wiederum mit der Abgabestation 4 in Verbindung steht. Die Metallisierungs- bzw. Sputterstation 13 weist vorzugsweise eine Ladeposition 19 sowie eine Prozessposition 20, in der das Sputtern bzw. Metallisieren erfolgt, auf. Die zu sputternden Substrate 2' (Substrate erster Art) werden über die Transporteinrichtung 5 auf einem (nicht dargestellten) Drehteller an der Ladeposition 19 der Sputterstation 13 abgelegt. Durch Einschleusen (nicht dargestellt) und Drehung des Drehtellers wird das Substrat 2' der Prozessposition 20 zugeführt, wobei gleichzeitig ein bereits metallisiertes Substrat 2' (erster Art) von der Prozessposition 20 zur Ladeposition 19 transportiert wird.

Die Vorrichtung 1 ist vorzugsweise derart ausgebildet, dass die erste Transporteinrichtung 5 die Substrate 2', 2" von der Zuführeinrichtung 3 zur Metallisierungs- bzw. Sputterstation 13 und von dort unbearbeitet bzw. bearbeitet zur Füge- bzw. Bondstation 14 transportiert. Vorzugsweise greift hierbei der Greifer 8 die auf der in Ladeposition 19 angeordneten Substrate während der Greifer 7 die auf der Zuführeinrichtung 3 angeordneten Substrate greift, wobei der Greifer 8 das gegriffenen Substrat nach einer Drehung der Vorrichtung 5 um den Winkel β an der Füge- bzw. Bondstation 14 abgibt bzw. positioniert und der Greifer 7 das gegriffene Substrat von der Zuführeinrichtung 3 zur Ladeposition 19 der Sputter- bzw. Metallisierungsstation 13 transportiert.

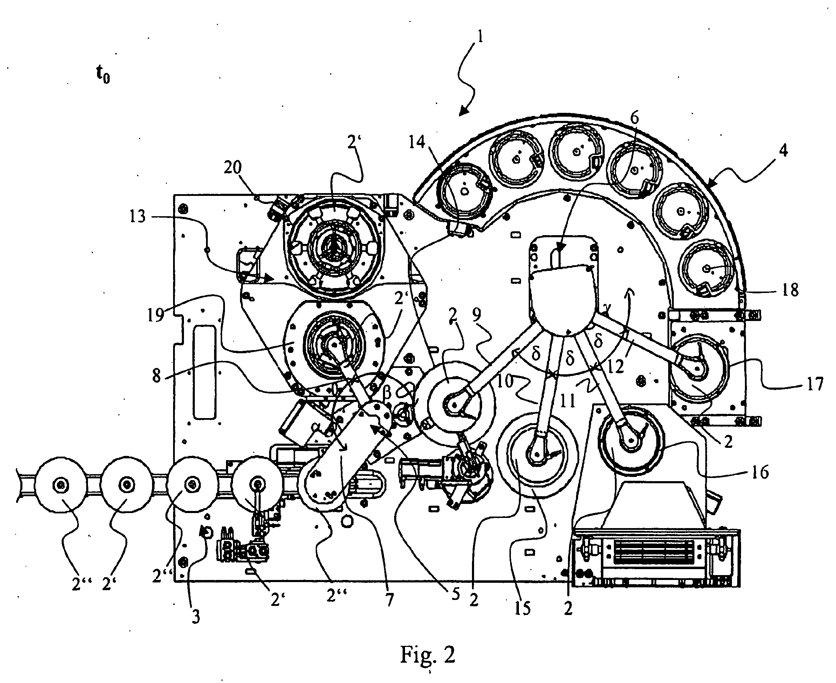

Die zweite Transporteinrichtung 6 ist vorzugsweise derart ausgebildet, dass die Greifer 9, 10, 11 und 12 in einer ersten in Fig. 1 dargestellten Position mit den Prozessstationen 14, 15, 16 bzw. 17 korrespondieren. In einer bevorzugten Ausführungsform eignet sich der Greifer 9 zum Transport eines gefügten Verbundsubstrats 2 von der Füge- bzw. Bondstation 14 zur Abschleuderstation 15, der Greifer 10 zum Transport eines gefügten Substrats 2 von der Abschleuderstation 15 zur Trocknungsstation 16, der Greifer 11 zum Transport, eines gefügten Substrats 2 von der Trocknungsstation 16 zur Scan- bzw. Inspektionsstation 17 und der Greifer 12 zum Transport eines Substrats 2 von der Scan- bzw. Inspektionsstation 17 zur Sortierstation 18. Greifer 9, 10, 11 und 12 sowie die Prozessstationen 14, 15, 16, 17 und 18 sind vorzugsweise derart ausgebildet bzw. angeordnet, dass die Verbundsubstrate 2 durch die Greifer 9, 10, 11 und 12 bei einer Drehung der Transporteinrichtung 6 um einen Winkel γ gleichzeitig von der jeweils ersten zur jeweils zweiten der zuvor beschriebenen Prozessstationen 14, 15, 16, 17 bzw. 18 transportiert werden. Der Transport- bzw. Handhabungsablauf der erfindungsgemäßen Vorrichtung bzw. des erfindungsgemäßen Verfahrens wird im Folgenden unter Bezugnahme auf die Figuren 2 bis 6, die jeweils eine erfindungsgemäße Vorrichtung zu einem Zeitpunkt t₀ bis t₄ = t₀ zeigen, erläutert.

Fig. 2 zeigt eine erfindungsgemäße Vorrichtung in Draufsicht zu einem Zeitpunkt t₀; wobei die Transporteinrichtung 5 derart positioniert ist, dass ihr Greifer 7 mit der Zuführstation 3 und ihr Greifer 8 mit der Metallisierungs- bzw. Sputterstation 13 bzw. der Ladeposition 19 korrespondiert. Die Greifer 9, 10, 11 und 12 der zweiten Transporteinrichtung 6 korrespondieren mit den Prozessstationen 14, 15, 16 bzw. 17.

Während der Sputter- bzw. Metallisierungsprozess eines Substrates (erster Art) 2' an der Bearbeitungsposition 20 der Sputterstation 13 im Gange ist bzw. läuft, greifen die Greifer der Transporteinrichtungen 5 bzw. 6 die an den entsprechenden Stationen 3 bzw. 13, 14, 15, 16 und 17 angeordneten Substrate 2', 2" bzw. 2. Hierbei greift der Greifer 7 der ersten Transportrichtung 5 ein Substrat 2" von der Zuführeinrichtung 3 während der Greifer 8 der ersten Transporteinrichtung 5 ein metallisiertes Substrat 2' der Ladeposition 19 der Sputterstation 13 entnimmt. Der Greifer 9 entnimmt der Fügestation ein gefügtes bzw. gebondetes Substrat 2, das ein gesputtertes bzw. metallisiertes Substrat 2' und ein nicht gesputtertes bzw. metallisiertes Substrat 2" aufweist. Der Greifer 19 greift ein Verbundsubstrat 2, das den Abschleuderprozess an der Abschleuderstation 15 durchlaufen hat, der Greifer 11 greift ein Substrat 2, das in der Prozessstation 16 getrocknet, vorzugsweise UV getrocknet wurde und der Greifer 12 greift ein Substrat 2, das in der Station 17 inspiziert bzw. gescannt wurde.

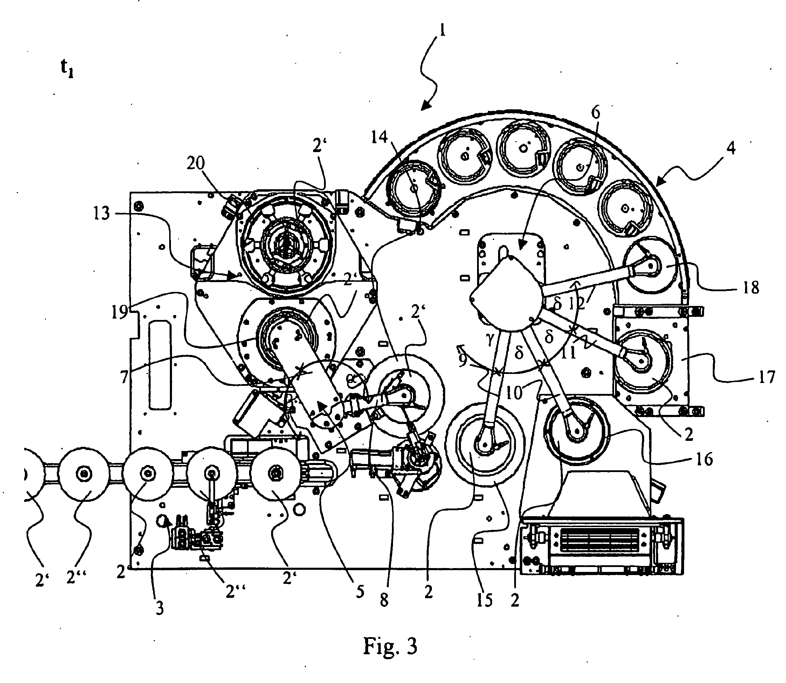

Fig. 3 zeigt eine erfindungsgemäße Vorrichtung 1 zu einem Zeitpunkt t₁, wobei die erste Transporteinrichtung 5 gegenüber dem Zeitpunkt t₀ (Fig. 1) um einen Winkel β nach rechts verdreht ist. Greifer 8 hat somit das gesputterte bzw. metallisierte Substrat 2' von der Ladeposition 19 der Sputterstation 13 zur Bond- bzw. Fügestation 14 transportiert, an der nun das Füge- bzw. Bondmaterial auf das Substrat 2' aufgetragen wird. Gleichzeitig hat der im Winkel α zum Greifer 8 angeordnete Greifer 7 das Substrat 2" von der Zuführeinrichtung 3 zur Ladeposition 19 der Sputterstation 13 transportiert. Während dieser Zeit läuft der Sputterprozess eines Substrats 2' in der Sputterstation 13 an der Prozessposition 20. Gleichzeitig hat die zweite Transporteinrichtung 6 die jeweiligen Substrate 2 von den im Bezug auf Fig. 1 beschriebenen Stationen um den Winkel γ zu den jeweils folgenden Stationen transportiert, an denen nun der jeweilige Bearbeitungsprozess erfolgt.

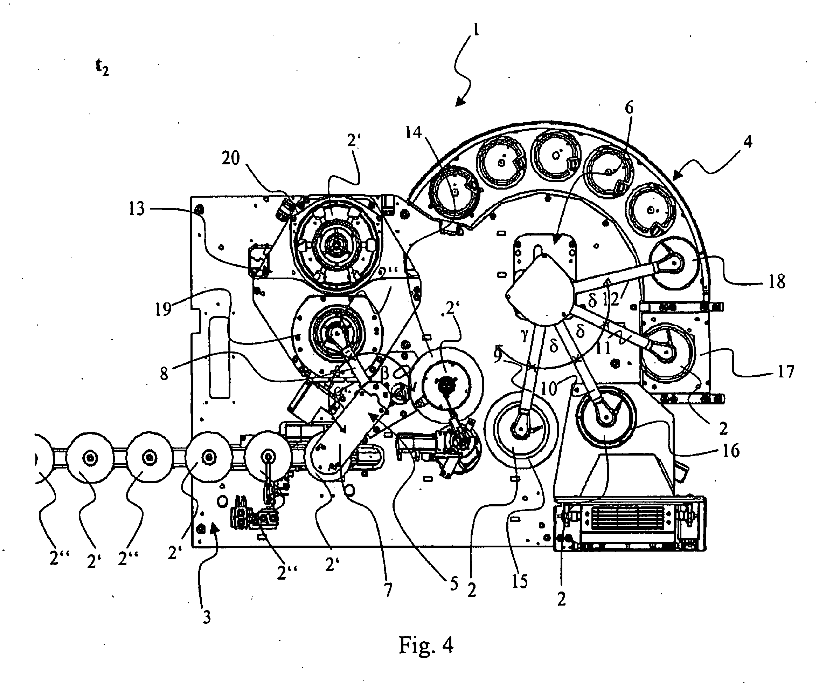

Zum Zeitpunkt t₂, dargestellt in Fig. 4, ist das Auftragen des Bondmaterials an der Station 14 beendet und die Transporteinrichtung 5 schwenkt ohne Substrat zurück in die Position entsprechend Fig. 1 und 2, wobei der Greifer 8 das in Ladeposition 19 abgelegte Substrat 2" (nicht metallisiert) greift und der Greifer 7 der Zuführstation 3 ein zu metallisierendes bzw. sputtemdes Substrat 2' greift. Zu diesem Zeitpunkt dauern sowohl das Sputtern in der Prozessposition 20 der Sputterstation 13 als auch das Abschleudern, Trocknen, Scannen und/oder Aussortieren in den Stationen 15, 16, 17 bzw. 18 an.

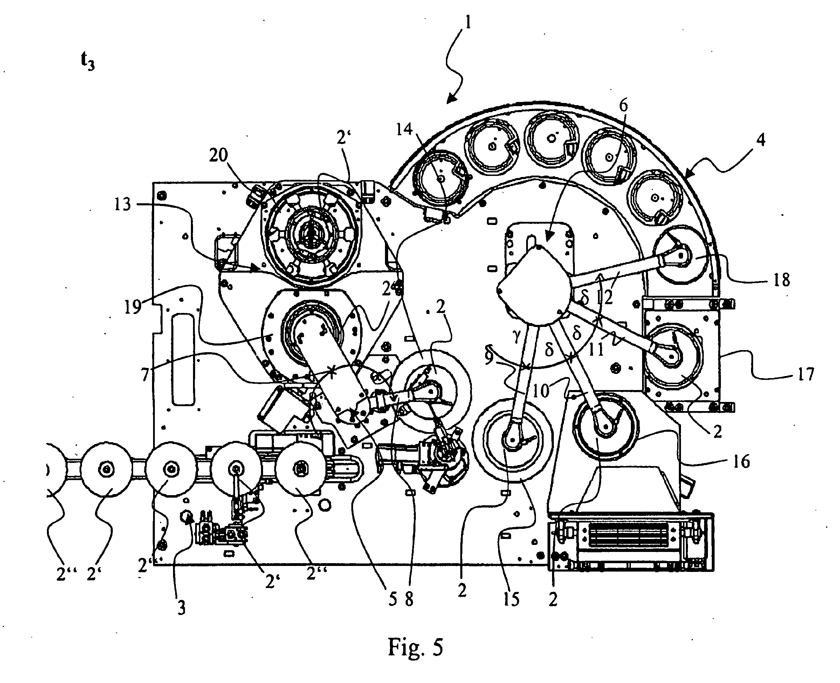

Zum Zeitpunkt t₃, wie in Fig. 5 dargestellt, hat die erste Transporteinrichtung 5 das Substrat 2" von der Ladeposition 19 zur Bondstation 14 transportiert, wo das Fügen des metallisierten Substrats 2' mit dem nicht metallisierten Substrat 2" erfolgt. Ferner hat der Greifer 7 das zu metallisierende Substrat 2' von der Zuführeinrichtung 3 zur Ladeposition 19 transportiert. Der Sputter- bzw. Metallisierungsprozess eines Substrats 2' in der Bearbeitungsposition 20 der Sputterstation 13 ist fertig. Vorzugsweise ist die Sputterstation derart ausgebildet, dass nun eine (nicht dargestellte) Schleuse der Sputterstation 13 evakuiert wird, das bereits metallisierte Substrat 2' gegen das neue, zu metallisierende Substrat 2' ausgewechselt und anschließend die Schleuse geflutet wird. Vorzugsweise erfolgt der Substratwechsel zwischen den Positionen 19 und 20 mittels eines Drehtellers der Sputterstation 13. Während dieser Zeit dauern alle bzw. zumindest ein Prozess an den Prozessstationen 15, 16, 17 und/oder 18 an.

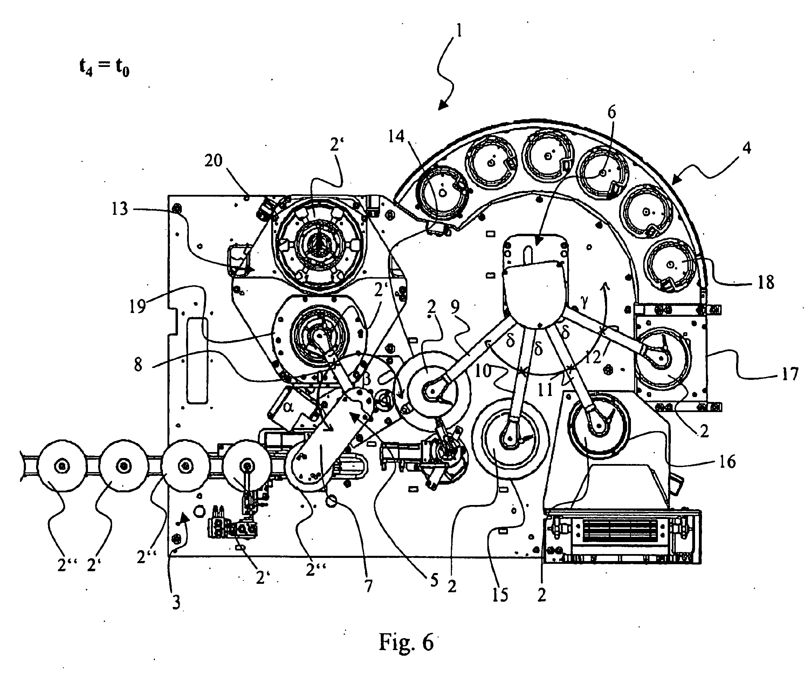

Zum Zeitpunkt t₄, der dem Zeitpunkt t₀ entspricht (vgl. Fig. 6), sind die Prozesse an den Stationen 15, 16, 17 und 18 beendet und die Transporteinrichtung 6 dreht auf die mit Bezug auf Fig. 1 beschriebene Position zurück, um wiederholt die bereits beschriebenen Handhabungen durchzuführen. Auch die Transporteinrichtung 5 ist in die im Zusammenhang mit Fig. 1 bereits beschriebene Position zurückgekehrt, um wiederholt die beschriebenen Schritte auszuführen. Der Sputtervorgang dauert, wie oben beschrieben, an.

Der beschriebene Vorgang wiederholt sich nun durchgängig. Wie aus der obigen Beschreibung hervorgeht, wird jedes zweite Substrat 2" keinem Sputterprozess unterzogen, sondern lediglich vom Greifer 7 auf der Ladeposition 19 abgelegt, von dort vom Greifer 8 entnommen und mit einem sich in der Bondstation 14 befindenden, metallisierten Substrat 2' (auf das Bondmaterial aufgetragen ist) verbunden. Die Substrate erster Art 2' werden in der Station 13 einem Sputterprozess unterzogen und danach in der Bondstation 14 mit einem nicht gesputterten Substrat 2" verbunden.

Aus der obigen Diskussion wird deutlich, dass Abschleudern, Trocknen und Scannen sowie Aussortieren der gebondeten Substrate von den Zeitpunkten t₁ bis t₃ andauern können. Diesen Prozessen steht somit ein großes Prozessfenster zur Verfügung. Der Sputterprozess kann vom Zeitpunkt t₄ bis t₃ ablaufen. Dem Prozess steht somit ebenfalls ein großes Prozessfenster zur Verfügung. Das Auftragen des Bondmaterials kann während t₁ ablaufen und das Fügen der Substrate 2' und 2" kann während t₃ ablaufen.

Die Vorrichtung weist vorzugsweise zwei autark arbeitende Handhabungs- bzw. Transportsysteme auf, wobei das erste Transportsystem 3, 5 den Transport, das Handhaben und das Fügen der Halbseiten durchführt, während das zweite Transportsystem 6 die Handhabung und den Transport der gefügten Verbundsubstrate 2 zu den Prozessstationen 15 bis 18 durchführt. Hierbei erfolgt die Transportbewegung des zweiten Transportsystems 6 nur halb so oft wie die Transportbewegung des ersten Transportsystems 5. Insbesondere vollzieht das zweite Transportsystem 6 eine Hin- und Herbewegung, d.h. Drehen um den Winkel +γ und -γ, während das erste Transportsystem 5 zwei Hin- und Herbewegungen, d.h. Drehungen um den Winkel +β und -β vollzieht.

Die erfindungsgemäße Vorrichtung und das erfindungsgemäße Verfahren ermöglichen den vom zweiten Transportsystem bedienten bzw. bestückten Prozessstationen wesentlich längere Prozesszeiten. Insbesondere bilden die vom zweiten Transportsystem bedienten Prozessstationen keinen sogenannten Bottleneck oder Flaschenhals und erlauben somit eine weitere Verkürzung der Zykluszeit. Vorzugsweise ermöglicht die erfindungsgemäße Vorrichtung bzw. das erfindungsgemäße Verfahren eine Verringerung der Zykluszeit um etwa 10 % gegenüber der Zykluszeit einer Spritzgussmaschine zur Herstellung der Substrate.

## Patentansprüche

1. Vorrichtung zum Herstellen von Verbundsubstraten (2) aus zwei gebondeten Substraten (2', 2") mit einer Vorrichtung (1) zum Transportieren bzw. Handhaben der Substrate (2', 2"; 2) von einer Zufuhreinrichtung (3) für die Substrate (2', 2") zu einer Abgabeeinrichtung (4) für die Verbundsubstrate (2) entlang mehrerer Prozessstationen (13 und 14 bzw. 14 bis 18), mit einer ersten Transporteinrichtung (5) und einer zweiten Transporteinnchtung (6), wobei die zweite Transporteinrichtung (6) innerhalb eines Bearbeitungszyklus nur halb so viele Transportbewegungen ausführt wie die erste Transporteinnchtung (5), **dadurch gekennzeichnet, daß** sowohl die erste Transporteinrichtung (5) als auch die zweite Transporteinrichtung (6) besagte Substrate (2',2") entlang mehrerer Prozessstationen (13 und 14 bzw. 14 bis 18) führt.

2. Vorrichtung nach Anspruch 1, wobei die erste Transporteinrichtung (5) im Materialfluss von ungebondeten Substraten bzw. Substrathälften (2', 2") angeordnet ist, und die zweite Transporteinrichtung (6) im Materialfluss der Verbundsubstrate (2) angeordnet ist.

3. Vorrichtung nach Anspruch 1 oder 2, wobei die erste Transporteinrichtung (5) im Transportablauf zwischen der Zuführeinrichtung (3) und der zweiten Transporteinrichtung (6) angeordnet ist.

4. Vorrichtung nach einem der Ansprüche 1 bis 3, wobei die zweite Transporteinrichtung (6) im Transportablauf zwischen der ersten Transporteinrichtung (5) und der Abgabeeinrichtung (4) angeordnet ist.

5. Vorrichtung nach einem der vorangegangenen Ansprüche, wobei die erste Transporteinrichtung (5) um eine Drehachse (X) um einen Winkel β drehbar ist und zwei auf einem Kreisbogen in einem Winkelabstand α um die Drehachse (X) angeordnete Greifer (7, 8) aufweist.

6. Vorrichtung nach einem der vorangegangenen Ansprüche, wobei die zweite Transporteinrichtung (6) um eine Drehachse (Y) um einen Winkel γ drehbar ist und

7. Vorrichtung nach Anspruch 5 oder 6, wobei der Winkel β dem Winkelabstand α entspricht.

8. Vorrichtung nach Anspruch 5, 6 oder 7, wobei der Winkel γ dem Winkelabstand δ entspricht.

9. Vorrichtung nach einem der vorangegangenen Ansprüche, wobei die erste Transporteinrichtung (5) abwechselnd Substrate erster Art (2') und zweiter Art (2") transportiert und wobei die zweite Transporteinrichtung (6) Verbundsubstrate (2) transportiert.

10. Vorrichtung nach einem der vorangegangenen Ansprüche, wobei die Transporteinrichtungen (5, 6) die Substrate ( 2', 2"; 2) nacheinander zu mehreren aufeinanderfolgenden Prozessstationen (13, 14, 15, 16, 17, 18), vorzugsweise einer Metallisierungs- bzw. Sputterstation (13), einer Bondingstation (14), einer Abschleuderstation (15), einer UV-Trockenstation (16), einer Scanstation (17) und/oder einer Aussortierstation (18) transportieren.

11. Vorrichtung nach einem der vorangegangenen Ansprüche, wobei die erste Transporteinrichtung (5) die Substrate erster Art (2') von der Zuführeinrichtung (3) zu einer Sputterstation (13) und von der Sputterstation (13) zu einer Bondingstation (14) sowie die Substrate zweiter Art (2") von der Zuführeinrichtung (3) ohne Bearbeitung über die Sputterstation (13) und/oder eine Ladeposition (19) zur Bondingstation (14) transportiert.

12. Vorrichtung nach einem der vorangegangenen Ansprüche, wobei die zweite Transporteinrichtung (6) die Verbundsubstrate (2) von der Bondingstation (14) über mindestens eine weitere Prozessstation (15, 16, 17, 18) zu einer Abgabeeinrichtung (4) transportiert.

13. Verwendung der Vorrichtung nach einem der Ansprüche 1 bis 12 zur Herstellung von DVDs (Digital Versatile Discs) und/oder CDs (Compact Discs).

14. Verfahren zum Herstellen von Verbundsubstraten (2) durch Bonden zweier Substrate (2', 2") mittels einer Vorrichtung nach einem der Ansprüche 1 bis 12.

## Claims

1. A device for making composite substrates (2) from two bonded substrates (2', 2") comprising a device (1) for transporting or handling the substrates (2', 2"; 2) from a feeder (3) for the substrates (2', 2") to a discharge device (4) for the composite substrates (2) along several process stations (13 and 14 or 14 to 18) via a first transport means (5) and a second transport means (6), wherein the second transport means (6) undergoes only half as many transport motions within a working cycle as the first transport means (5), **characterised in that** both the first transport means (5) and the second transport means (6) transport said substrates (2', 2") along several process stations (13 and 14 or 14 to 18).

2. The device according to claim 1, wherein the first transport means (5) is arranged in the material flow of non-bonded substrates or substrate halves (2', 2") and the second transport means (6) is arranged in the material flow of the composite substrates (2).

3. The device according to claim 1 or 2, wherein the first transport means (5) is arranged in the transport path between the feeder (3) and the second transport means (6).

4. The device according to any one of claims 1 to 3, wherein the second transport means (6) is arranged in the transport path between the first transport means (5) and the discharge device (4).

5. The device according to any one of the preceding claims, wherein the first transport means (5) is rotatable around an axis (X) by an angle β and comprises two grippers (7, 8) arranged on a circular arc at an angular distance α around the axis (X).

6. The device according to any one of the preceding claims, wherein the second transport means (6) is rotatable around an axis (Y) by an angle γ and comprises several, preferably four grippers (9, 10, 11, 12), which are arranged on a circular arc at an angular distance δ around the axis (Y).

7. The device according to claim 5 or 6, wherein the angle β corresponds to the angular distance α.

8. The device according to claim 5, 6 or 7, wherein the angle γ corresponds to the angular distance δ.

9. The device according to any one of the preceding claims, wherein the first transport means (5) alternately transports substrates of the first kind (2') and the second kind (2") and wherein the second transport means (6) transports composite substrates (2).

10. The device according to any one of the preceding claims, wherein the transport means (5, 6) transport the substrates (2', 2"; 2) one after the other to several successive process stations (13, 14, 15, 16, 17, 18), preferably to a metallisation or sputter station (13), a bonding station (14), a centrifugal station (15), a UV drying station (16), a scanning station (17) and/or a sorting station (18).

11. The device according to any one of the preceding claims, wherein the first transport means (5) transports the substrates of the first kind (2') from the feeder (3) to a sputter station (13) and from the sputter station (13) to a bonding station (14) as well as the substrates of the second kind (2") from a feeder (3) without processing to the bonding station (14) via the sputter station (13) and/or a loading position (19).

12. The device according to any one of the preceding claims, wherein the second transport means (6) transports the composite substrates (2) from the bonding station (14) to a discharge device (4) via at least one further process station (15, 16, 17, 18).

13. Use of the device according to any one of claims 1 to 12 for making DVDs (Digital Versatile Discs) and/or CDs (Compact Discs).

14. Method for making composite substrates (2) by bonding two substrates (2', 2") by means of a device according to any one of claims 1 to 12.

## Revendications

1. Dispositif de fabrication de substrats composites (2) constitués de deux substrats (2', 2") collés comprenant un dispositif (1) destiné au transport ou à la manipulation des substrats (2', 2" ; 2) d'une installation d'acheminement (3) pour les substrats (2', 2") vers une installation de distribution (4) pour le substrat composite (2) le long de plusieurs postes de procédé (13 et 14 ou bien 14 à 18), comprenant une première installation de transport (5) et une seconde installation de transport (6), la seconde installation de transport (6) ne réalisant, au sein d'un cycle de travail, que la moitié du nombre des mouvements de transport effectués par la première installation de transport (5), **caractérisé en ce qu'**aussi bien la première installation de transport (5) que la seconde installation de transport (6) acheminent lesdits substrats (2', 2") le long de plusieurs postes de procédé (13 et 14 ou bien 14 à 18).

2. Dispositif selon la revendication 1, dans lequel la première installation de transport (5) est disposée dans un flux matériel de substrats ou bien de moitiés de substrat (2', 2") non collés, et la seconde installation de transport (6) est disposée dans un flux matériel des substrats composites (2).

3. Dispositif selon la revendication 1 ou 2, dans lequel la première installation de transport (5) est disposée dans le défilement du transport entre l'installation d'acheminement (3) et la seconde installation de transport (6).

4. Dispositif selon l'une quelconque des revendications 1 à 3, dans lequel la seconde installation de transport (6) est disposée dans le défilement du transport entre la première installation de transport (5) et l'installation de distribution (4).

5. Dispositif selon l'une quelconque des revendications précédentes, dans lequel la première installation de transport (5) peut pivoter d'un angle β autour d'un axe de pivotement (X) et présente deux éléments préhenseurs (7, 8) disposés sur un arc de cercle à un intervalle d'angle α autour de l'axe de pivotement (X).

6. Dispositif selon l'une quelconque des revendications précédentes, dans lequel la seconde installation de transport (6) peut pivoter d'un angle γ autour d'un axe de pivotement (Y) et présente plusieurs, de préférence quatre éléments préhenseurs (9, 10, 11, 12) disposés sur un arc de cercle à un intervalle d'angle δ autour de l'axe de pivotement (Y).

7. Dispositif selon la revendication 5 ou 6, dans lequel l'angle β correspond à l'intervalle d'angle α.

8. Dispositif selon l'une quelconque des revendications 5, 6 ou 7, dans lequel l'angle γ correspond à l'intervalle d'angle δ.

9. Dispositif selon l'une quelconque des revendications précédentes, dans lequel la première installation de transport (5) transporte alternativement des substrats du premier type (2') et du second type (2") et la seconde installation de transport (6) transporte des substrats composites (2).

10. Dispositif selon l'une quelconque des revendications précédentes, dans lequel les installations de transport (5, 6) transportent les substrats (2', 2" ; 2) successivement vers plusieurs postes de procédé (13, 14, 15, 16, 17, 18) successifs, de préférence vers un poste de métallisation ou de pulvérisation (13), un poste de collage (14), un poste de centrifugation (15), un poste de séchage par rayonnement ultraviolet (16), un poste de numérisation (17) et/ou un poste de tri (18).

11. Dispositif selon l'une quelconque des revendications précédentes, dans lequel la première installation de transport (5) transporte les substrats du premier type (2') de l'installation d'acheminement (3) vers un poste de pulvérisation (13) et du poste de pulvérisation (13) vers un poste de collage (14) ainsi que les substrats du second type (2") de l'installation d'acheminement (3) vers le poste de collage (14), sans traitement et en passant par le poste de pulvérisation (13) et/ou une position de chargement (19).

12. Dispositif selon l'une quelconque des revendications précédentes, dans lequel la seconde installation de transport (6) transporte les substrats composites (2) du poste de collage (14) vers une installation de distribution (4) par l'intermédiaire d'au moins un autre poste de procédé (15, 16, 17, 18).

13. Utilisation du dispositif selon l'une quelconque des revendications 1 à 12 pour la fabrication de DVD (Digital Versatile Discs - Disques numériques polyvalents) et/ou de CD (Compact Discs - Disques compacts).

14. Procédé de fabrication de substrats composites (2) par collage de deux substrats (2', 2") au moyen d'un dispositif selon l'une quelconque des revendications 1 à 12.
